# EUROPEAN PATENT APPLICATION

(11) **EP 0 533 289 A1**
(43) Date of publication of application: **24.03.1993**
(21) Application number: 92202853.5
(22) Date of filing: 17.09.1992
(51) Int. Cl.: F41H 5/04

(54) **Composite armour plate comprising a composite layer and a metal layer**

(30) Priority: 20.09.1991 NL 9101583
(71) Applicant: DSM N.V., NL-6411 TE Heerlen (NL)
(72) Inventor: Bruinink, Peter, NL-6828 JL Arnhem (NL)

(57) **Abstract**

Composite armour plate, comprising a metal layer and a composite layer, the composite layer comprising fibres and a polymer matrix, and the metal of the metal layer having a maximum hardness of 70 HB.

The armour plate is low weight and affords good protection against ballistic impact.

The preferred metals are aluminium or an aluminium alloy.

## Description

The present invention concerns a composite armour plate comprising a metal layer and a composite layer, the composite layer comprising fibres and a polymer matrix.

A composite armour plate of this kind is known from EP-A-197.279. The known armour plate contains a composite layer and a layer of hard material such as ceramics or metal.

For suitable metals to be used in the metal layer of the composite armour plate EP-A-197.279 refers to R.C. Liable, Ballistic Materials and Penetration Mechanics, Vol. 5 (1980), Elsevier. In this work armour plates are discussed which consist of special hard grades of steel or aluminium. It is also stated that the protection afforded by armour plate against ballistic impact increases proportionately to the hardness of the material of which the armour plate consists.

Armour plates which consist completely of composites are highly resistant to ballistic impact and are lightweight, but these types of armour plate are bulky, they are often not sufficiently stiff, and their surface is difficult to paint and is not wear resistant. Moreover, armour plates which consist completely of composites are expensive as the fibres in the composites are expensive.

Armour plates consisting completely of metal or ceramics afford good protection against ballistic impact, they are sufficiently stiff, they are relatively inexpensive, and their surface can easily be painted and is wear resistant; however, these types of armour plate have a very high areal density.

Composite armour plates have the advantages of both armour plates which consist completely of composites and armour plates which consist completely of metal or ceramics. Composite armour plates are for example less bulky, stiffer and less expensive than armour plates which consist completely of composites, and, moreover, their surface can be easily painted and is wear resistant. This is, of course, in addition to comparable protection against ballistic impact.

Although the known composite armour plates have a lower areal density than armour plates consisting completely of metal or ceramics, the known composite armour plates still, however, have the disadvantage that the weight per surface unit is relatively high.

For a large number of applications it is important that the composite armour plates have a low areal density. This is especially important for personal protection, such as for helmets, shields, shoes and the like. Low weight is also of importance in composite armour plates used in, for instance, helicopters, cars and high-speed combat vehicles.

The purpose of the present invention is thus to provide a composite armour plate with a lower areal density than the known composite armour plates, without adversely affecting the protection against ballistic impact afforded by the armour plate.

This kind of armour plate is achieved when the metal in the metal layer has a maximum Brinell hardness of 75 HB, preferably a maximum of 50 HB or more preferably a maximum of 40 HB.

It is surprising that a metal with such a low hardness achieves good results, as, as stated above, EP-A-197.279 and R.C. Liable specifically refer to the use of hard metals in armour plates.

Brinell hardness is measured in accordance with DIN 53456.

The protection against ballistic impact afforded by armour plate is defined using the value V50. This is the speed of standard projectiles fired at armour plate such that 50% of the projectiles penetrate the armour plate.

The V50 can, for instance, be measured according to the standard MIL-STD-662B/1971.

In general, the composite armour plates according to the present invention have a metal layer on one side. In this case the composite armour plate is fitted with the metal layer on the side where the ballistic impact can be expected.

Various metals or metal alloys qualify for use as the metal layer in the composite armour plate according to the present invention, such as copper or copper alloys, lead or lead alloys, titanium or titanium alloys, magnesium or magnesium alloys. Preferably for the metal layer a metal is used having also a low specific weight. Aluminium or an aluminium alloy is preferred.

Good results are achieved if the metal layer is from 0.1 to 2.0 mm thick. A metal-layer thickness of from 0.3 to 0.6 mm is preferred. In this way a very light composite armour plate is obtained which has all the other advantages of a composite armour plate.

All fibres known for this purpose qualify as fibres for the composite layer of the composite armour plate, such as glass fibres, nylon fibres, polyaramid fibres, polyvinyl alcohol fibres, polyethylene fibres and polyacrylonitrile fibres.

The fibres in the composite layer can be staple fibres or filaments, generally combined into yarns.

The yarns are generally incorporated into the composite layer in the form of fabric layers or unidirectional yarn layers.

Very good results are obtained if the fibres of which the composite layer is composed are prepared using the solution-spinning/gel-drawing process as described in, for instance, GB-A-2,042,414 and GB-A-2,051,667. The solution-spinning/gel-drawing process consists in principle of preparing a polymer solution, forming the solution into a filament bundle at a temperature above the solution temperature of the polymer, cooling the filaments to a temperature below the solution temperature of the polymer, removing all or some of the solvent and drawing the filaments while the rest of the solvent is removed.

Very good results are obtained if, for the preparation of the fibres using the solution-spinning/gel-drawing process, linear polyalkene with a weight-average molecular weight of at least 600,000 g/mol is chosen. Linear polyethylene is preferably used as the linear polyalkene. By linear polyethylene is meant in this patent polyethylene with less than one side chain per 100 carbon atoms, preferably with less than one side chain per 300 carbon atoms, that can contain up to 5 mol % of one or more other alkenes copolymerizable with it, such as propylene, butene, pentene, 4-methylpentene or octene. Other polyalkenes qualify, such as propylene homopolymers and copolymers. The polyalkenes used can also contain small amounts of one or more other polymers, especially alkene-1-polymers.

For the polymer matrix of the composite layer the thermosetting polymers, thermoplastic polymers or rubbers known for this can be used. Examples of thermosetting polymers which qualify as a polymer matrix to be used in combination with the polyalkene fibres include vinylester resins, polyesters resins, epoxy resins and polyurethane resins. In addition, good results are obtained using the thermoplastic polymers acrylonitrile-butadiene-styrene (ABS), plasticized polyvinylchloride (PVC), polyethylene (PE), preferably linear low density polyethylene (LLDPE) or low density polyethylene (LDPE) or other ethylene copolymers.

### Comparative experiment A

A construction, 300 mm long, 300 mm wide and composed as follows was stacked:
- one steel-plate layer,
- one binder-film layer,
- 15 fabric layers alternating with 14 layers of thermoplastic film.

The steel plate was Duressa^{R} steel supplied by Ulbricht GmbH (Austria). The steel plate was 0.9 mm thick and has a Brinell hardness of 450 HB. The binder film contained modified polyethylene as described in EP-A-340877. The binder film was 50 µm thick. The fabric was Dyneema ^{R} SK 66 yarn with a yarn titre of 400 denier. The fabric contained 16 yarns in the warp and in the weft direction and was plain-woven fabric, and the areal density was 153 g/m². The thermoplastic film consisted of LDPE, type Stamylan ^{R} NC 514, supplied by DSM (Netherlands). The thermoplastic film was 30 µm thick.

The construction was compressed to a composite armour plate between two flat, rigid metal plates at a temperature of 110 °C at 1 bar pressure for 15 minutes. To give an indication of the ballistic protection afforded by the composite armour plate, the v50 for .22 Fragment Simulation Projectiles (FSP) was measured in accordance with the MIL-STD-662B/1971 standard.

The V50 was 506 m/s. The total areal density (TAD) of the composite armour plate was 10.6 kg/m².

### Comparative experiment B

A composite armour plate was manufactured and tested as described in comparative experiment A, except that 25 fabric layers were stacked alternately with 24 layers of thermoplastic film.

The V50 was 570 m/s. The TAD was 12 kg/m².

### Comparative experiment C

A composite armour plate was manufactured and tested as described in comparative experiment A, except that:
- the metal layer was omitted,
- 41 fabric layers were stacked alternately with 40 layers of thermoplastic film.
The V50 was 570 m/s. The TAD was 8.1 kg/m².

### Example I

A composite armour plate was manufactured and tested as described in comparative experiment A, except that:
- the steel layer was replaced by a layer of aluminium (Al 1050) with a Brinell hardness of HB 35 and a thickness of 0.8 mm
- 32 layers of fabric were stacked alternately with 31 layers of thermoplstic film.
The V50 was 544 m/s. The TAD was 8.3 kg/m³

The composite armour plate according to the invention with the layer of soft aluminium affords clearly better ballistic protection or has a clearly lower weight with comparable protection than the armour plates according to the comparative experiments A and B.

### Example II

A composite armour plate was manufactured and tested as described in example I, except that the aluminium layer was 0.5 mm thick and that 36 fabric layers and 35 layers of thermoplastic film were stacked alternately. The V50 was 566 m/s. The TAD was 8.1 kg/m².

The armour plates from comparative experiment B, example II and comparative experiment C afford approximately the same ballistic protection.

The armour plates from comparative experiment B and example II are both composite armour plates and both have the advantages of this, but the composite armour plate according to the invention (example II) has a considerably lower areal density. The areal density of the composite armour plate according to the invention is even on a par with the areal density of the armour plate made completely of composite according to comparative experiment C and thus no longer has the disadvantages of the known composite armour plate of high weight, while the composite armour plate according to the invention still has the advantages of the armour plate made completely of composite, such as a higher stiffness, less bulk, lower costs, paintability and better wear resistance.

### Example III

A composite armour plate was manufactured and tested as described in comparative experiment A, except that:
- the steel layer was replaced by a layer of aluminium-magnesium alloy (International Registration number Al-5052 according to the "Registration Record of International Alloy Designations and Chemical Compositions Limits for Wrought Aluminium and Wrought Aluminium Alloys", issued by the Aluminium Association, Washington) 0.8 mm thick and having a Brinell hardness of HB 73, measured in accordance with DIN 53456,
- 32 fabric layers were stacked alternately with 31 layers of thermoplastic film.
The V50 was 514 m/s. The TAD was 8.2 kg/m².

The armour plate from example III also has a higher ballistic protection at a considerably lower weight than the armour plate of comparative experiment A.

## Claims

1. Composite armour plate, comprising a metal layer and a composite layer, the composite layer comprising fibres and a polymer matrix, characterized in that the metal of the metal layer has a maximum Brinell hardness of 75 HB.

2. Armour plate according to claim 1, characterized in that the metal has a maximum hardness of 50 HB.

3. Armour plate according to claim 1 or 2, characterized in that aluminium or an aluminium alloy is used as the metal.

4. Armour plate according to one of the claims 1-3, characterized in that the metal layer is from 0.1 to 2.0 mm thick.

5. Armour plate according to one of the claims 1-4, characterized in that the metal layer is from 0.3 to 0.6 mm thick.

6. Armour plate according to one of the claims 1-5, characterized in that the fibres are prepared using the solution-spinning/gel-drawing process.

7. Armour plate according to claim 6, characterized in that for the preparation of the fibres the polymer chosen is linear polyalkene with a weight-average molecular weight of at least 600,000 g/mol.

8. Armour plate according to claim 7, characterized in that polyethylene is used as polyalkene.
